# EUROPÄISCHE PATENTSCHRIFT

(11) **EP 0 648 898 B1**
(45) Veröffentlichungstag und Bekanntmachung des Hinweises auf die Patenterteilung: **29.01.1997**
(21) Anmeldenummer: 94890175.6
(22) Anmeldetag: 18.10.1994
(51) Int. Cl.: E01F 9/08, B64F 1/18

(54) **Landepiste, insbesondere für Hubschrauber**
Airfield, in particular for helicopters
Piste d'atterrissage, en particulier pour hélicoptères

(30) Priorität: 18.10.1993 AT 2074/93
(43) Veröffentlichungstag der Anmeldung: 19.04.1995
(73) Patentinhaber: Brosch, Walpurga, Mag., A-8580 Köflach (AT)
(72) Erfinder: Brosch, Walpurga, Mag., A-8580 Köflach (AT)
(74) Vertreter: Brauneiss, Leo, Dipl.Ing.

(56) Entgegenhaltungen:
- EP-A- 0 286 748
- DE-A- 3 314 117
- US-A- 3 428 019
- US-A- 4 590 471
- US-A- 4 684 353

## Beschreibung

Die Erfindung betrifft eine Landepiste, insbesondere für Hubschrauber, aber auch für Fallschirmspringer und ähnliche Einsatzorgane, mit mindestens einem Basiselement, an dem elektrolumineszente Lichtquellen befestigt sind, die über Anspeiseleitungen an eine Stromquelle angeschlossen sind.

Es ist bekannt, daß die Landestelle für Hubschrauber, Fallschirmspringer oder ähnliche Einsatzorgane insbesondere bei schlechten Sichtbedingungen mit ausreichend starken Lichtquellen markiert bzw. begrenzt werden muß. Auf Hubschrauberlandeplätzen ist daher auf entsprechenden Halterungen eine Vielzahl von Scheinwerfern am Boden verankert, welche mit Glühlampen versehen sind und durch bekannte Stromaggregate gespeist werden.

Es sind auch tragbare, beleuchtbare Landepisten bekannt, die aus mehreren im Boden verankerbaren Halterungen mit Scheinwerfern und aus einem Stromgenerator zur Speisung dieser Scheinwerfer bestehen. Derartige tragbare Landepisten erlauben zwar die Landung auch bei schlechten Sichtbedingungen an nicht als Landebahnen ausgerüsteteten Stellen, jedoch sind diese tragbaren Landepisten schwer und sperrig und müssen daher auf Kraftfahrzeugen zum Einsatzort gebracht werden. In unwegsamem Gebiet können diese tragbaren Landepisten daher nicht eingesetzt werden. Ein weiterer Nachteil dieser bekannten tragbaren Landepisten liegt in ihrer begrenzten, vom Stromaggregat abhängigen Leuchtdauer.

Aus der DE-A1-33 14 117 ist eine Leuchtsignalplatte für Schiffdecks bekannt geworden, die eine Begrenzungsanzeige beispielsweise für den Landebereich eines Flugzeuges oder Hubschraubers bildet. Diese Leuchtsignalplatte weist ein Leichtmetallgehäuse auf, das elektrolumineszente Lichtquellen enthält, die über Anspeiseleitungen mit Strom versorgt werden. Es handelt sich hierbei um ein starres, schweres, sperriges Metallgebilde, das an einem mit dem Schiffsdeck verschweißten Rahmen starr verankert wird, und das somit nicht als tragbare Landepiste, die wahlweise an verschiedenen Landestellen zum Einsatz gebracht werden soll, verwendbar ist.

Die vorliegende Erfindung hat sich zur Aufgabe gestellt, eine Landepiste zu schaffen, die einerseits ein geringes Volumen und ein geringes Gewicht aufweist und somit auch händisch problemlos transportiert werden kann, andererseits eine hinreichende Beleuchtung der Landebahn sicherstellt, sodaß diese auch aus größerer Entfernung optimal eingesehen werden kann, wobei auch die erforderliche Energieversorgung der Lichtquellen problemlos möglich ist. Zur Lösung dieser Aufgabe dienen die kennzeichnenden Merkmale des Anspruches 1.

Die erfindungsgemäße Ausbildung der Landepiste ermöglicht es einerseits, die Landepiste in einen transportfähigen Zustand zu bringen, wobei auch ein händischer Transport ohne Schwierigkeiten möglich ist, gewährleistet aber trotzdem eine wetterfeste Ausführung, bei der insbesondere auch die Anspeiseleitungen, die sich im Inneren zwischen den beiden Schichten befinden, gegen Regen, aber auch gegen sonstige Beschädigungen, beispielsweise beim Verlegen der Landepiste auf einem steinigen Grund, geschützt sind, sodaß die Stromversorgung sichergestellt ist. In Verbindung mit den äußerst flachen elektrolumineszenten Lichtquellen, die auch in einem gewissen Bereich biegbar sind, wird somit eine besonders leichte, einfach handzuhabende und dennoch äußerst betriebssichere Landepiste geschaffen.

Eine besonders zweckmäßige Ausführungsform ergibt sich dann, wenn die elektrolumineszenten Lichtquellen von einer am Basiselement festgelegten Deckschicht aus transparentem Material abgedeckt sind, wodurch diese elektrolumineszenten Lichtquellen nicht nur geschützt, sondern auch zusätzlich am Basiselement verankert sind.

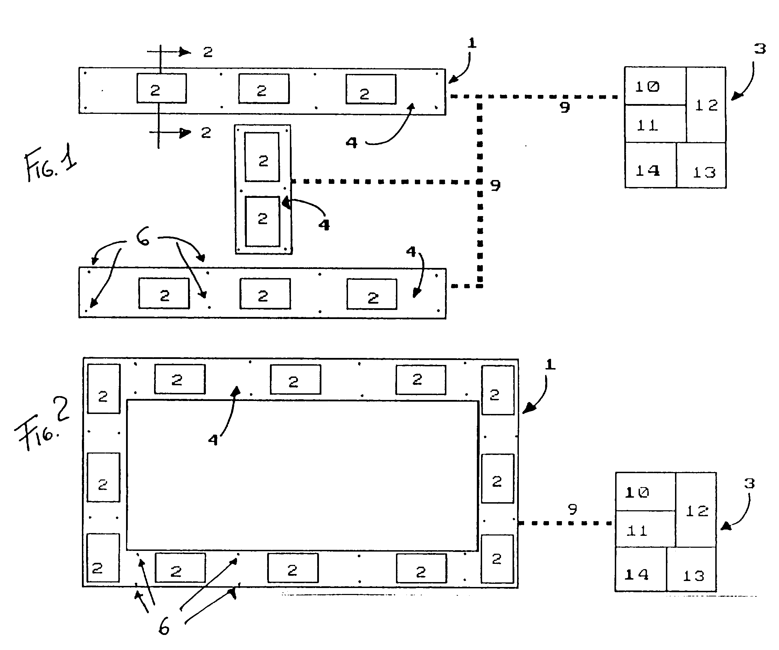

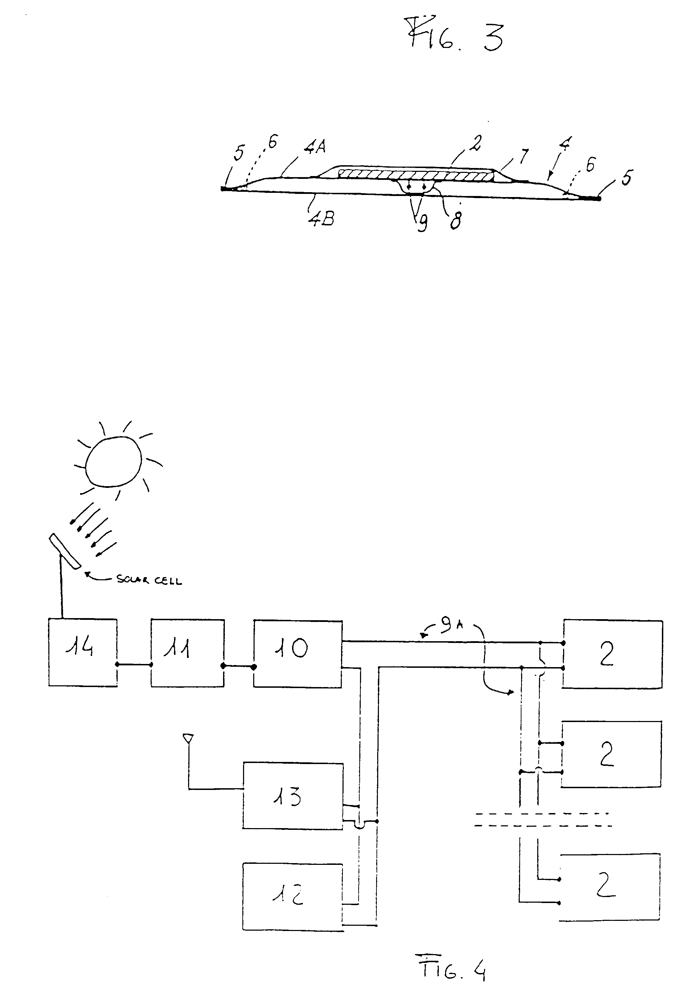

Weitere Merkmale und Vorteile der Erfindung ergeben sich aus der folgenden Beschreibung eines in der Zeichnung dargestellten Ausführungsbeispieles. In dieser zeigen die Fig.1 und 2 schematisch eine Draufsicht auf eine erfindungsgemäße Landepiste. Fig.3 stellt einen Schnitt nach der Linie 2 - 2 in Fig. 1, jedoch in größerem Maßstab dar. Fig.4 zeigt ein Blockdiagramm der einzelnen Bestandteile der erfindungsgemäßen Landepiste.

Fig.1 zeigt eine Ausführungsform einer Landepiste 1 mit einem flachen Basiselement 4 in Form eines H und Fig.2 mit einem flachen Basiselement 4 in Form eines Rechteckes. Auf dem Basiselement 4 ist eine Anzahl von elektrolumineszenten Lichtquellen 2 befestigt. An das Basiselement 4 ist ein Block 3 zur Energieversorgung und Schaltungsbedienung der elektrolumineszenten Lichtquellen 2 angeschlossen.

Wie aus Fig.3 ersichtlich ist, besteht das Basiselement 4 aus zwei übereinander angeordneten Schichten 4A, 4B aus einem marktüblichen, flexiblen, synthetischen Material. Die beiden Schichten 4A, 4B sind an den Rändern 5, beispielsweise durch Verschweißen, miteinander verbunden.

Im Randbereich weist das Basiselement 4 eine Reihe von kleinen Öffnungen 6 auf, die beispielsweise von Ösen gebildet sind. Durch diese Öffnungen können Verankerungspflöcke zur Verankerung des Basiselementes 4 im Erdboden hindurchgesteckt werden.

Die elektrolumineszenten Lichtquellen 2 sind auf der Außenseite der oberen Schicht 4A des Basiselementes 4 befestigt und vorzugsweise durch eine Deckschicht 7 aus marktüblichem, transparenten, synthetischen Material abgedeckt, die die elektrolumineszenten Lichtquellen 2 vollkommen überzieht. Auf der Innenseite der oberen Schicht 4A ist eine Schutzhülse 8 für die zwischen den beiden Schichten 4A, 4B vorgesehenen Anspeiseleitungen 9 angeordnet.

Die elektrolumineszenten Lichtquellen 2 sind vorzugsweise Elektrolumineszenzlampen, wie sie üblicherweise zur Rückwärtsbeleuchtung von Flüssigkristallschirmen (LCD) verwendet werden. Derartige Elektrolumineszenzlampen sind sehr flach, zumindest teilweise biegsam, sehr sparsam im Energieverbrauch und zeichnen sich durch eine optimale Sichtbarkeit aus, da sie im Gegensatz zu Glühlampen nicht ein punktförmiges, sondern ein flächiges einheitliches Licht abgeben.

Die Stromversorgung der elektrolumineszenten Lichtquellen 2 erfolgt vorzugsweise mit einer Spannung von 95 Volt und einer Frequenz von 380 Hz. Die elektrolumineszenten Lichtquellen 2 sind über die erwähnten Anspeiseleitungen 9 bzw. 9A (siehe Fig.4) und einem Inverter 10 an eine Batterie 11, vorzugsweise paarweise, angeschlossen, sodaß eine Lichtquelle auf einer Seite der Landepiste mit einer Lichtquelle auf der entgegengesetzten Seite gleichzeitig mit Energie versorgt wird. Der Inverter 10 und die Batterie 11 befinden sich im Block 3, der zur Energieversorgung und Schaltungsbedienung der Lichtquellen 2 dient. Zum Block 3 gehört weiters ein Schaltungselement 12 zur Regelung der verschiedenen Leuchtfunktionen, die je nach gewünschter Eingabe über eine mit dem Schaltungselement 12 gekoppelte Interface-Vorrichtung gesteuert werden. So können die Lichtquellen 2 beispielsweise alle dauernd leuchten oder lediglich blinken und/oder nur während einer bestimmten Zeitdauer leuchten.

Das Schaltungselement 12 umfaßt einen elektronischen Mikroprozessor und einen Speicher zur Vorprogrammierung der gewünschten Leuchtfunktionen während bestimmter Tage bzw. zu einer vorbestimmten Uhrzeit.

Das Schaltungselement 12 kann weiters mit einem Funkempfangsgerät 13 gekoppelt sein, das über Funksignale die Steuerung der verschiedenen Leuchtfunktionen bewirkt. Dadurch wird ermöglicht, die Lichtquellen 2 aus der Ferne ein- und ausschalten zu können, beispielsweise während der Annäherung eines Hubschraubers an die Landepiste. Wird das Funkempfangsgerät 13 aktiviert, so sperrt dieses den Mikroprozessor mit der programmierten Einschaltung der Lichtquellen 2, um Interferenzen zwischen den beiden Einschaltsystemen zu vermeiden.

An das Schaltungselement 12 kann weiters eine übliche Vorrichtung zur Funkortung angeschlossen sein, mit deren Hilfe etwa ein Hubschrauber in die Nähe der Landepiste gelotst werden kann, worauf aus dem Hubschrauber mittels Fernbedienung über das Funkempfangsgerät 13 die Lichtquellen 2 der Landepiste eingeschaltet werden können.

Die Batterie 11 ist mit einem Batterieladegerät 14 gekoppelt, das auch von Solarzellen gespeist werden kann.

Die erfindungsgemäße Landepiste kann ohne Schwierigkeiten auch händisch transportiert werden, da sie in zwei Teile mit einem Gewicht von zirka 20 kg aufgeteilt werden kann. Einer der beiden Teile beinhaltet das vollständige Basiselement 4, der andere Teil den Block 3 zur Speisung und Schaltungsbedienung. Die erfindungsgemäße Landepiste läßt sich somit problemlos auch in schwer zugänglichen oder überhaupt nicht vom Straßennetz erschlossenen Gebieten einsetzen, wenn es notwendig ist, dort eine funktionelle Landepiste bei schwierigen Sichtbedingungen (Nacht, Nebel, Regen) zur Verfügung zu haben. Die erfindungsgemäße Landepiste ist wasserundurchlässig und kann daher auch über längere Zeit in abgelegenen Gegenden gelassen werden, ohne daß die Landepiste unter Witterungsbedingungen leidet. Insbesondere bei kurzfristiger Verwendung ist die Energieversorgung der Landepiste autonom.

Die erfindungsgemäße Landepiste ist nicht nur für Hubschrauber, sonder auch für einen Personeneinsatz, beispielsweise für Fallschirmspringer, bestens geeignet, da die Frequenz des von den elektrolumineszenten Lichtquellen 2 abgestrahlten Lichts die Nachtsicht nicht beeinträchtigt.

Die Erfindung ist nicht auf das in der Zeichnung dargestellte und eben beschriebene Ausführungsbeispiel beschränkt. Es sind vielmehr im Rahmen der Erfindung Abänderungen möglich.

## Patentansprüche

1. Landepiste (1), insbesondere für Hubschrauber, mit mindestens einem Basiselement (4), an dem elektrolumineszente Lichtquellen (2) befestigt sind, die über Anspeiseleitungen (9) an eine Stromquelle angeschlossen sind, dadurch gekennzeichnet, daß das Basiselement (4) aus zwei übereinander angeordneten Schichten (4A, 4B) aus einem flexiblen Material besteht, die an ihren Rändern (5) miteinander verbunden sind, daß die elektrolumineszenten Lichtquellen (2) an der Außenseite der oberen Schicht (4A) angebracht sind, und daß die Anspeiseleitungen (9) zwischen den beiden Schichten (4A, 4B), vorzugsweise innerhalb einer an der Innenseite einer der beiden Schichten (4A, 4B) befestigten Schutzhülse (8), angeordnet sind.

2. Landepiste nach Anspruch 1, dadurch gekennzeichnet, daß die elektrolumineszenten Lichtquellen (2) von einer am Basiselement (4) festgelegten Deckschicht (7) aus transparentem Material abgedeckt sind.

3. Landepiste nach Anspruch 1, dadurch gekennzeichnet, daß in die Anspeiseleitungen (9) ein Schaltungselement (12) mit einer Interface-Vorrichtung zur Steuerung der verschiedenen Leuchffunktionen sowie gegebenenfalls ein Speicher zur Programmierung der gewünschten Leuchffunktionen eingeschaltet ist.

4. Landepiste nach Anspruch 1, dadurch gekennzeichnet, daß in die Anspeiseleitungen (9) ein Inverter (10) zur Regelung der Frequenz und Spannung des aus einer Batterie (11) abgegebenen Stromes eingeschaltet ist.

5. Landepiste nach Anspruch 3, dadurch gekennzeichnet, daß das Schaltungselement (12) mit einem Funkempfangsgerät (13) gekoppelt ist, das über Funksignale die Steuerung der verschiedenen Leuchffunktionen bewirkt.

6. Landepiste nach Anspruch 1, dadurch gekennzeichnet, daß ein Funkortungsgerät als Landehilfe vorgesehen ist.

7. Landepiste nach einem der Ansprüche 1 bis 6, dadurch gekennzeichnet, daß eine die Stromquelle bildende Batterie (11) an ein Batterieladegerät (14) anschließbar ist.

## Claims

1. Airfield or landing area (1), in particular for helicopters, with at least one basic element (4) on which electroluminescent light sources (2) connected via power lines (9) to a power source are attached, characterized in that the basic element (4) consists of superimposed layers (4A, 4B) of a flexible material mutually connected on their edges (5), that the electroluminescent light sources (2) are disposed on the outside of the upper layer (4A) and that the power lines (9) are disposed between the two layers (4A, 4B), preferably within a protective sleeve (8) provided on the inside of one of the two layers (4A, 48).

2. Landing area according to claim 1, characterized in that the electroluminescent light sources (2) are covered by a protective layer (7) of transparent material placed on the basic element (4).

3. Landing area according to claim 1, characterized in that a circuit element (12) with an interface device for controlling the various illuminating functions as well as optionally a memory for programming the desired illuminating functions is interposed in the power lines (9).

4. Landing area according to claim 1, characterized in that an inverter (10) for controlling the frequency and voltage of the power supplied by a battery (11) is interposed in the power lines (9).

5. Landing area according to claim 3, characterized in that the circuit element (12) is coupled with a radio receiver (13) effecting the control of the various illuminating functions via radio signals.

6. Landing area according to claim 1, characterized in that a position finder is provided as landing aid.

7. Landing area according to any one of the claims 1 to 6, characterized in that a battery (11) constituting the power source is attachable to a battery charging device (14).

## Revendications

1. Piste d'atterrissage, en particuler pour hélicoptères, avec au moins un élément de base (4) auquel des sources lumineuses (2) électroluminescentes reliées à une source de courant sont attachées par l'intermédiaire des lignes d'alimentation (9), caractérisée en ce que l'élément de base (4) consiste en deux couches superposées (4A, 4B) en matériau souple reliées l'une à l'autre à leurs bords (5), que les sources lumineuses (2) électroluminescentes sont attachées à la surface extérieure de la couche supérieure (4A) et que les lignes d'alimentation (9) sont disposées entre les deux couches (4A, 4B), de préférence à l'intérieur d'une cosse protectrice (8) reliée à la surface intérieure d'une des deux couches (4A, 4B).

2. Piste d'atterrissage selon la revendication 1, caractérisée en ce que les sources lumineuses (2) électroluminescentes sont couvertes par une couche de recouvrement (7) en matériau transparent placée sur l'elément de base (4).

3. Piste d'atterrissage selon la revendicaton 1, caractérisée en ce qu'un élément ae circuit (12) avec un dispositif d'interface pour contrôler les différentes fonctions d'illumination ainsi que, le cas échéant, une mémoire pour programmer les fonctions d'illumination désirées, est interposé dans les lignes d'alimentation (9).

4. Piste d'atterrissage selon la revendication 1, caractérisée en ce qu'un inverseur (10) pour contrôler la fréquence et tension du courant délivré par une batterie (11) est interposé dans les lignes d'alimentation (9).

5. Piste d'atterrissage selon la revendication 3, caractérisée en ce que l'élément de circuit (12) est couplé à un récepteur radio (13) effectuant la contrôle des différentes fonctions d'illumination au moyen de signaux radio.

6. Piste d'atterrissage selon la revendication 1, caractérisée en ce qu'un récepteur gonio est pourvu comme dispositif auxiliaire d'atterrissage.

7. Piste d'atterrissage selon une des revendications 1 à 6, caractérisée en ce qu'une batterie (11) constituant la source de courant est reliable à un chargeur d'accumulateurs (14).
